# EUROPÄISCHE PATENTSCHRIFT

(11) **EP 2 923 085 B1**
(45) Veröffentlichungstag und Bekanntmachung des Hinweises auf die Patenterteilung: **21.12.2016**
(21) Anmeldenummer: 14781896.7
(22) Anmeldetag: 09.10.2014
(51) Int. Cl.: F04B 53/16, F04B 53/08, F02M 53/00, F02M 59/10, F02M 59/06, F02M 59/02

(54) **STECKPUMPE FÜR EIN COMMON-RAIL-SYSTEM UND MOTORANORDNUNG MIT EINEM VERBRENNUNGSMOTOR, EINEM COMMON-RAIL-SYSTEM UND EINER STECKPUMPE**
PLUG-IN PUMP FOR A COMMON-RAIL SYSTEM AND ENGINE ARRANGEMENT HAVING AN INTERNAL COMBUSTION ENGINE, HAVING A COMMON RAIL SYSTEM AND HAVING A PLUG-IN PUMP
POMPE ENFICHABLE POUR UN SYSTÈME À RAMPE COMMUNE ET DISPOSITIF DE MOTEUR PRÉSENTANT UN MOTEUR À COMBUSTION INTERNE, UN SYSTÈME À RAMPE COMMUNE ET UNE POMPE ENFICHABLE

(30) Priorität: 11.10.2013 DE 102013220600
(43) Veröffentlichungstag der Anmeldung: 30.09.2015
(73) Patentinhaber: Continental Automotive GmbH, 30165 Hannover (DE)
(72) Erfinder: NIGRIN, Uwe, 98693 Ilmenau (DE); VU, Ngoc-Tam, 71642 Ludwigsburg (DE); EDERER, Andreas, 93194 Walderbach (DE)
(86) Internationale Anmeldenummer: PCT/EP2014/071676
(87) Internationale Veröffentlichungsnummer: WO 2015/052289

(56) Entgegenhaltungen:
- DE-A1-102008 002 195
- DE-A1-102010 031 185
- DE-C1- 10 139 054
- US-A1- 2010 047 084

## Beschreibung

Druckspeichergestützte Einspritzsysteme für Verbrennungsmotoren, insbesondere Dieselmotoren, benötigen zur Bereitstellung des recht hohen Kraftstoffdruckes von möglicherweise über 2000 bar eine Kolbenpumpe mit einem Kolben, der abgedichtet in einem Zylinder geführt wird. Der Kolben kann von einem Exzenter alternierend bewegt werden, wobei der Exzenter mit dem Verbrennungsmotor gekoppelt ist, der von dem Einspritzsystem mit Kraftstoff versorgt wird. Zur besonders kompakten Integration ist bekannt, derartige Axialkolbenpumpen als "Steckpumpen" auszuführen, welche in eine Öffnung eines Motorbauteils einsteckbar und dort mit dem Motorbauteil verschraubbar sind.

Das Beaufschlagen von Kraftstoff mit einem hohen Druck führt zu einer Wärmeentwicklung in der Steckpumpe insbesondere im Bereich des Kolbens und des Zylinders, in dem der Kolben sich bewegt. Eine Abfuhr der Wärme kann durch den Wärmeeintrag aus dem Verbrennungsmotor erschwert werden.

US 2010/047084A1 beschreibt eine Kraftstoffpumpenanordnung mit einer Kraftstoffpumpe, die eine Kammer zum Aufnehmen von Kraftstoff und eine erste druckerzeugende Komponente, die zur Bewegung ausgebildet ist und eine druckerzeugende Oberfläche aufweist, die eine die Kammer begrenzende Oberfläche bildet, sowie eine zweite druckerzeugende Komponente mit einem Raum, in dem die druckerzeugende Komponente ausgebildet ist, sich zu bewegen, und weiter ein Spiel, das zwischen den druckerzeugenden Komponenten vorgesehen ist, sowie Antriebsmittel umfasst, die dazu ausgebildet sind, eine Kraft an die erste Komponente anzulegen, so dass diese in dem Raum eine Bewegung ausführt, während der sie den in der Kammer befindlichen Kraftstoff unter Druck setzt. Die Kraftstoffpumpenanordnung umfasst tempera tureinstellende Mittel, die dazu ausgebildet sind, eine Temperatur innerhalb eines vorbestimmten Temperaturbereichs in einem Bereich der Kraftstoffpumpe einzuhalten, welcher Bereich das Spiel und zumindest Teile der druckerzeugenden Komponenten umfasst.

Es ist dementsprechend eine Aufgabe der Erfindung, eine Motoranordnung mit einer Steckpumpe für ein Common-Rail-System vorzuschlagen, die eine möglichst zuverlässige und ausreichende Wärmeabfuhr für einen dauerhaften Betrieb erlaubt.

Diese Aufgabe wird durch eine Motoranordnung mit einer Steckpumpe mit den Merkmalen des unabhängigen Anspruchs 1 gelöst. Vorteilhafte Weiterbildungen und Ausführungsformen sind den Unteransprüchen und der nachfolgenden Beschreibung zu entnehmen.

Es wird eine Motoranordnung mit einem Motorbauteil und mit einer Steckpumpe für ein Common-Rail-System vorgeschlagen, die ein Pumpengehäuse mit einem darin ausgebildeten Zylinder, einem darin geführten Kolben, einem Kraftstoffeinlass und einen Kraftstoffauslass aufweist, wobei das Pumpengehäuse ferner einen Steckabschnitt zum Einführen des Pumpengehäuses in eine Öffnung eines Motorbauteils und einen den Steckabschnitt begrenzenden Flansch zum Befestigen des Pumpengehäuses an dem Motorbauteil aufweist. Die Steckpumpe zeichnet sich dadurch aus, dass das Pumpengehäuse mindestens einen Fluidkanal mit einem separaten Fluideinlass und einem separaten Fluidauslass aufweist, wobei der Fluideinlass mit einer Fluid abgebenden Leitung des Verbrennungsmotors und der Fluidauslass mit einer Fluid aufnehmenden Leitung des Verbrennungsmotors verbindbar sind.

Ziel der Erfindung liegt dementsprechend darin, eine vorbekannte Steckpumpe so zu modifizieren, dass sie durch aktives Einleiten eines Fluids-aktiv gekühlt wird. Durch den Strömungskanal kann ein Fluid mit einem niedrigeren Temperaturniveau durch das Pumpengehäuse geleitet werden, als das Pumpengehäuse im Betrieb aufweist. Das Anschließen des separaten Fluideinlasses und des separaten Fluidauslasses mit einer Fluid abgebenden Leitung und einer Fluid aufnehmenden Leitung führt dazu, dass insbesondere ein Kühlwasserkreislauf oder ein ebenfalls der Kühlung unterworfener Ölkreislauf des Verbrennungsmotors mit der Steckpumpe koppelbar sind, so dass die Pumpe genau dann Wärme an eine Wärmesenke übertragen kann, wenn der Verbrennungsmotor und folglich auch die Steckpumpe an sich betrieben werden. Das verwendete Fluid, bzw. die Fluid aufnehmende Leitung und die Fluid abgebende Leitung, können entweder als Anschlüsse an einer Kühlmittelleitung eines Kühlmittelkreislaufs oder eines Ölkreislaufs ausgeführt sein.

Der Strömungskanal in dem Pumpengehäuse ist als eine durchströmbare, sich zumindest bereichsweise linienförmig erstreckende Vertiefung zu verstehen, die von dem Fluid durchströmt werden kann. Der Strömungskanal kann durch mehrteilige Ausführung des Pumpengehäuses hergestellt werden, durch Gussverfahren, Erosionsverfahren oder, wie weiter nachfolgend ausgeführt, auch durch Anordnen einer abdichtbaren Ringnut.

Der Fluideinlass kann eine Bohrung sein, die mit einem Anschlussmittel, etwa einem Nippel, verbindbar ist und sich an einer Außenseite eines dem Flansch abgewandten Abschnitts des Pumpengehäuses befindet. Dort erstreckt sich der Fluideinlass zu dem Strömungskanal hin. Der Fluideinlass kann eine Bohrung mit einem Innengewinde sein, in die ein Schraubnippel mit einem Außengewinde einschraubbar ist und bevorzugt über eine Dichtung abgedichtet werden kann. Aufgrund des relativ niedrigen Druckes des Fluidstroms in dem Strömungskanal im Vergleich zu den Drücken des durch die Steckpumpe geförderten Kraftstoffstroms sind an die mechanischen Eigenschaften des Einlass deutlich geringere Anforderungen zu stellen als für den eigentlichen Kraftstoffauslass. Die Mittel zum Aufnehmen einer Leitung können Rohrenden mit Auswölbungen, Absätzen oder dergleichen umfassen, auf die beispielsweise eine flexible Leitung aufsteck- und sicherbar ist.

Der Fluidauslass kann ebenfalls eine Bohrung sein, die mit einem Anschlussmittel, etwa einem Nippel, verbindbar ist und sich an einer Außenseite eines dem Flansch abgewandten Abschnitts des Pumpengehäuses befindet. Auch hier erstreckt sich der Fluidauslass zu dem Strömungskanal hin. Das durchströmte Fluid gerät somit vom Fluideinlass zu dem Fluidauslass, wo es über Anschlussmittel beispielsweise über flexible Fluidleitungen zurück in den ursprünglichen Fluidkreislauf gelangt.

Der Flansch weist eine zumindest teilweise umlaufende Nut auf, die über eine umlaufende Dichtung über den Flansch an dem Motorbauteil abgedichtet ist und im montierten Zustand der Steckpumpe den Strömungskanal darstellt. Ein derartiger Strömungskanal ist besonders leicht zu fertigen, da lediglich eine zumindest teilweise umlaufende Nut in den Flansch eingearbeitet werden muss. Besonders bevorzugt ist die Nut vollständig umlaufend, so dass beispielsweise an zwei um 180° versetzten Stellen des resultierenden Ringkanals ein Einlaufbereich und ein Auslaufbereich definiert werden können, die mit dem Fluideinlass bzw. dem Fluidauslass verbindbar sind.

In einem Verbindungsbereich an dem Motorbauteil ist ein erster Fluidanschluss angeordnet, der bei montierter Pumpe mit einem Fluideinlass an dem Flansch fluchtet. Der Fluideinlass kann hierbei als ein Einlaufbereich der Ringnut ausgestaltet sein. Eine externe Leitung und die Anschlussmittel, über die das Fluid zu dem Fluideinlass transportiert wird, können somit eingespart werden.

Alternativ weist das Motorbauteil in einem Verbindungsbereich einen zweiten Fluidanschluss auf, der derart positioniert ist, dass er mit einem Fluidauslass an dem Flansch fluchtet. Damit können ebenfalls eine externe Leitung und Anschlussmittel eingespart werden. Besonders vorteilhaft ist weiterhin, dass sich die Kühlwirkung durch das durchströmende Fluid auch in einen pumpen- bzw. flanschnahen Bereich des Motorbauteils erstrecken kann, was wiederum den Wärmeeintrag des Motorbauteils in die Pumpe verringert und folglich die Kühlwirkung noch weiter verbessert.

Selbstverständlich ist es auch möglich, einen flanschseitigen Fluideinlass für den Strömungskanal vorzusehen, der mit einem vom Flansch beäbstandeten Fluidauslass für eine externe Abfuhrleitung kombiniert wird. Gleichermaßen kann ein vom Flansch beabstandeter Fluideinlass mit einem flanschseitigen Fluidauslass kombiniert werden.

Der Betrieb einer derartigen Pumpe wird durch die aktive Kühlung deutlich verbessert, so dass Bauteile wirksam vor Temperatursteigerung geschützt werden, was insbesondere die Integrität von Dichtungen aus Polymerwerkstoffen verbessert. Bei der Verdichtung des Kraftstoffes erfolgt ferner keine Dampfblasenbildung und kein Cracken des Kraftstoffs.

Bei der Motoranordnung kann der Fluideinlass mit einer Fluid abgebenden Leitung und der Fluidauslass mit einer Fluid aufnehmenden Leitung verbunden sein. Die Fluid abgebende Leitung und die Fluid aufnehmende Leitung sind etwa Bestandteile eines Kühlkreislaufs oder eines Ölkreislaufs.

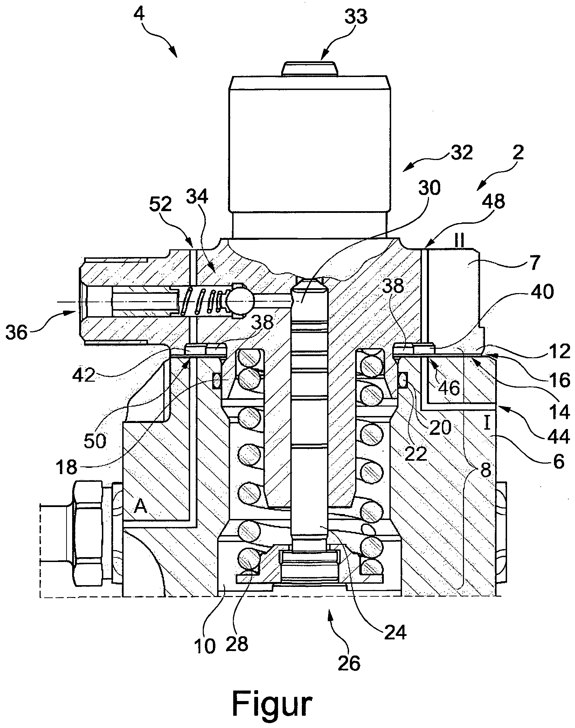

Andere Ausführungsformen und viele der genannten Vorteile ergeben sich im Hinblick auf die Zeichnung. Die dargestellten Elemente der Zeichnung sind nicht notwendigerweise maßstabsgetreu zueinander gezeigt.

Die einzige Figur zeigt eine Steckpumpe in einer Schnittdarstellung.

In der Figur bezeichnen gleiche Bezugszeichen gleiche oder funktionsgleiche Elemente, Bauteile, Komponenten oder Verfahrensschritte, soweit nichts Gegenteiliges angegeben ist.

Die Figur zeigt eine Steckpumpe 2 in einer Motoranordnung 4, welche neben der Steckpumpe 2 auch ein Motorbauteil 6 umfasst, das beispielsweise ein Motorblock oder ein Teil eines Motorblocks ist.

Die Steckpumpe 2 weist ein Gehäuse 7 mit einem Steckabschnitt 8 auf, der in eine Öffnung 10 des Motorbauteils 6 einsteckbar ist. Der Steckabschnitt 8 wird durch einen Flansch 12 begrenzt, der bei eingesteckter Steckpumpe 2 auf einer Auflagefläche 14 des Motorbauteils 6 aufliegt und dort über eine Dichtungsscheibe 16 abgedichtet wird.

Randseitig an dem Flansch 12 der Steckpumpe 2 befindet sich ein ringförmiger und zur Öffnung 10 gewandter Vorsprung 18, der die Pumpe 2 in der Öffnung 10 zentriert. Die Kontaktflächen zwischen dem Vorsprung 18 und der Öffnung 10 sind über einen Dichtungsring 20, welcher in einer Rille 22 in der Öffnung 10 gelagert ist, abgedichtet.

Ein Axialkolben 24 wird über eine in der Figur nur teilweise dargestellte Exzenteranordnung 26 gegen die rückstellende Kraft einer Feder 28 alternierend zu einer Pumpkammer 30 im Innern der Steckpumpe 2 bewegt. In einer Verlängerung der Längsachse des Kolbens 24 befindet sich ein Strömungsventil 32, welches den Zufluss von Kraftstoff aus einem Kraftstoffeinlass 33 zu der Steckpumpe 2 steuert. Lateral an die Pumpkammer 30 schließt sich ein Auslassventil 34 an, durch das der druckbeaufschlagte Kraftstoff zu einem Kraftstoffauslass 36 gefördert wird.

Durch das kontinuierliche Pumpen des Kraftstoffes sowie durch die an dem Motorbauteil 6 vorhandene Wärme kann die Pumpe 2 einem starken Wärmeeintrag ausgesetzt sein. Um diesen abzuführen, wird die Steckpumpe 2 über die Motoranordnung 4 in die aktive Kühlung des Verbrennungsmotors integriert, der von der Steckpumpe über ein Common-Rail-System mit Kraftstoff versorgt wird. Hierzu ist ein Strömungskanal 38 vorgesehen, durch den ein Fluid gefördert werden kann, welches durch einen Einlaufbereich 40 in den Strömungskanal 38 gelangt. Das Fluid kann ferner über einen Auslaufbereich 42 den Strömungskanal 38 wieder verlassen.

Der Strömungskanal 38 ist in dem gezeigten Fall als eine Ringnut ausgeführt, welche sich über den vollständigen Umfang der randseitigen Erhebung 18 erstreckt und beispielsweise durch Ab- bzw. Überdrehen herstellbar ist. Der Einlaufbereich 40 bzw. der Auslaufbereich 42 können als radiale Erstreckung bzw. als Tasche aus dem Strömungskanal 38 nach außen ausgeführt sein, an die über eine Verbindungsbohrung oder direkt über den Flansch 12 ein Anschluss erfolgt.

Beim Durchströmen des Strömungskanals 38 ist bei symmetrischer Ausgestaltung des Strömungskanals 38 eine Stromteilung zu erwarten, so dass jeweils die Hälfte des Fluidstroms im bzw. gegen den Uhrzeigersinn um den Einsteckabschnitt 38 herum fließt. Lediglich schematisch werden die möglichen Anschlüsse gezeigt, mit denen das Fluid in den Strömungskanal 38 eingeführt bzw. abgeführt wird. In der Zeichnungsebene auf der rechten Seite ist eine Option I gezeigt, bei der ein Zulauf durch das Motorbauteil 6 erfolgt, wobei dieses dann einen entsprechenden Fluideinlass 44 aufweist. Über eine oder mehrere Verbindungsbohrungen oder dergleichen kann ein Fluidanschluss 46 in der Auflagefläche 14 realisiert werden, der mit dem Einlaufbereich 40 der Steckpumpe 2 in eine Fluchtung gebracht wird. Dann bildet der Einlaufbereich 40 den eigentlichen Fluideinlass der Steckpumpe 2.

Bei einer alternativen Option II wäre ein Zulauf über das Gehäuse 7 der Steckpumpe 2 möglich, bei dem beispielsweise ein Fluideinlass 48 an einer der Auflagefläche 14 entgegengesetzten Seite des Flanschs 12 der Steckpumpe 2 angeordnet ist und über einen entsprechenden Strömungskanal mit dem Einlaufbereich 40 verbunden ist. Der Fluideinlass 48 könnte etwa über einen Schraubnippel eine Verbindung zu einer flexiblen Fluidleitung herstellen.

Ein Fluidauslass bzw. der Ablauf des Fluids könnte weiterhin ebenfalls über zwei verschiedene alternative Optionen A und B realisiert werden. Während bei Option A analog zu I ein Fluidanschluss 50 im Innern des Motorbauteils 6 verlaufen kann, könnte ein Fluidauslass 52 gemäß Option B mit einem Anschlussmittel in Verbindung stehen. Der Fluidauslass ist lediglich schematisch gezeigt und muss nicht in der Nähe des Auslasses 36 angeordnet werden, um das Material dort nicht zu schwächen.

Für die Kühlung der Pumpe 2 eignen sich sämtliche Fluide, die ein niedrigeres Temperaturniveau als die Steckpumpe 2 und das Motorbauteil 6 aufweisen. Kühlmittel, die meistens auf Wasser basieren und verschiedene Zusätze insbesondere zum Vermeiden von Frostschäden aufweisen, sind bevorzugt. Allerdings wäre es auch denkbar, die Kühlung der Steckpumpe 2 über einen Ölkreislauf durchzuführen, der ebenfalls einer aktiven Kühlung unterliegt.

Der Wärmeeintrag aus der Steckpumpe 2 an das jeweilige Fluid ist im Vergleich zum Verbrennungsmotor sehr gering und würde die Auslegung dessen Kühlung praktisch nicht beeinflussen. Dennoch könnte damit eine sehr effektive aktive Kühlung der Steckpumpe 2 erfolgen, was zu einer möglichen weiteren Kompaktierung einer derartigen Steckpumpe führt und mehrere Nachteile sehr zuverlässig verhindern kann. Diese betreffen etwa eine Dampfblasenbildung von Kraftstoff oder das Cracken von Kraftstoff innerhalb der Pumpe.

Es sei weiterhin darauf hingewiesen, dass eine Zufuhr und eine Abfuhr des betreffenden Fluids auch kombiniert über die Alternativen I und A, I und B, II und A oder II und B erfolgen kann.

### Bezugszeichenliste

- 2: Steckpumpe
- 4: Motoranordnung
- 6: Motorbauteil
- 7: Gehäuse
- 8: Steckabschnitt
- 10: Öffnung
- 12: Flansch
- 14: Auflagefläche
- 16: Dichtungsscheibe
- 18: Vorsprung
- 20: Dichtungsring
- 22: Rille
- 24: Axialkolben
- 26: Exzenteranordnung
- 28: Feder
- 30: Pumpkammer
- 32: Strömungsventil
- 33: Kraftstoffeinlass
- 34: Auslassventil
- 36: Kraftstoffauslass 36
- 38: Strömungskanal
- 40: Einlaufbereich
- 42: Auslaufbereich
- 44: Fluideinlass
- 46: Fluidanschluss
- 48: Fluideinlass
- 50: Fluidanschluss
- 52: Fluidauslass

- I: Option: Zulauf über Motorbauteil 6
- II: Option: Zulauf über Gehäuse 7
- A: Option: Ablauf über Motorbauteil 6
- B: Option: Ablauf über Gehäuse 7

## Patentansprüche

1. Motoranordnung (4) mit einem Verbrennungsmotor und einem Common-Rail-System, das ein Motorbauteil (6) mit einer Öffnung (10) und eine Steckpumpe (2) aufweist, wobei die Steckpumpe (2) aufweist:
- ein Pumpengehäuse (7) mit einem darin ausgebildeten Zylinder,
- einen darin geführten Kolben (24),
- einen Kraftstoffeinlass (33) und
- einen Kraftstoffauslass (36),
wobei das Pumpengehäuse (7) ferner einen Steckabschnitt (8) zum Einführen des Pumpengehäuses (7) in die Öffnung (10) des Motorbauteils (6) und einen den Steckabschnitt (8) begrenzenden Flansch (12) zum Befestigen des Pumpengehäuses (7) an dem Motorbauteil (6) besitzt,
wobei das Pumpengehäuse (7) mindestens einen Strömungskanal (38) mit einem separaten Fluideinlass (40, 48) und einem separaten Fluidauslass (52) aufweist,
wobei der Fluideinlass (40, 48) mit einer Fluid abgebenden Leitung des Verbrennungsmotors und der Fluidauslass (52) mit einer Fluid aufnehmenden Leitung des Verbrennungsmotors verbindbar sind,
wobei der Strömungskanal (38) eine zumindest teilweise umlaufende Nut aufweist, die über eine umlaufende Dichtung (16) über den Flansch (12) an dem Motorbauteil abdichtbar ist,
**dadurch gekennzeichnet, dass** in einem Verbindungsbereich an dem Motorbauteil (6) ein erster Fluidanschluss (46) angeordnet ist, der bei montierter Steckpumpe (2) an dem Motorbauteil (6) mit dem Fluideinlass (40) an dem Flansch (12) fluchtet
oder
**dadurch gekennzeichnet, dass** in einem Verbindungsbereich an dem Motorbauteil (6) ein zweiter Fluidanschluss (50) angeordnet ist, der bei montierter Steckpumpe (2) an dem Motorbauteil (6) mit dem Fluidauslass (42) an dem Flansch (12) fluchtet.

2. Motoranordnung (4) nach Anspruch 1, wobei der Fluideinlass (40, 48) eine an einem dem Flansch (12) abgewandten Bereich angeordnete und mit einem Anschlussmittel verbindbare Bohrung ist.

3. Motoranordnung (4) nach Anspruch 1 oder 2, wobei der Fluidauslass (52) eine an einem dem Flansch (12) abgewandten Bereich angeordnete und mit einem Anschlussmittel verbindbare Bohrung ist.

4. Motoranordnung (4) nach einem der Ansprüche 1 bis 3,
wobei der Fluideinlass (46, 48) mit einer Fluid abgebenden Leitung und der Fluidauslass (42, 52) mit einer Fluid aufnehmenden Leitung des Verbrennungsmotors verbunden sind.

5. Motoranordnung (4) nach Anspruch 4, wobei die Fluid abgebende Leitung und die Fluid aufnehmende Leitung Bestandteile eines Kühlkreislaufs des Motors sind.

6. Motoranordnung (4) nach Anspruch 4, wobei die Fluid abgebende Leitung und die Fluid aufnehmende Leitung Bestandteile eines Ölkreislaufs des Motors sind.

7. Motoranordnung (4) mit einem Verbrennungsmotor und einem Common-Rail-System, das eine Steckpumpe (2) nach einem der Ansprüche 1 bis 6 aufweist,
wobei der Fluideinlass (46, 48) mit einer Fluid abgebenden Leitung und der Fluidauslass (42, 52) mit einer Fluid aufnehmenden Leitung des Verbrennungsmotors verbunden sind.

8. Motoranordnung (4) nach Anspruch 7, wobei die Fluid abgebende Leitung und die Fluid aufnehmende Leitung Bestandteile eines Kühlkreislaufs des Motors sind.

9. Motoranordnung (4) nach Anspruch 7, wobei die Fluid abgebende Leitung und die Fluid aufnehmende Leitung Bestandteile eines Ölkreislaufs des Motors sind.

10. Verwendung eines Kühl- oder Ölkreislaufs eines Verbrennungsmotors mit einem Common-Rail-System zum Kühlen einer Steckpumpe des Common-Rail-Systems über einen in die Steckpumpe (2) integrierten Strömungskanal (38).

## Claims

1. Engine arrangement (4) having an internal combustion engine and a common-rail system which has an engine component (6) having an opening (10), and a plug-in pump (2), wherein the plug-in pump (2) has:
- a pump housing (7) with a cylinder formed therein,
- a piston (24) guided therein,
- a fuel inlet (33), and
- a fuel outlet (36),
wherein the pump housing (7) further has a plug-in section (8) for inserting the pump housing (7) into the opening (10) in the engine component (6) and has a flange (12), which delimits the plug-in section (8), for fastening the pump housing (7) to the engine component (6),
wherein the pump housing (7) has at least one flow duct (38) with a separate fluid inlet (40, 48) and a separate fluid outlet (52),
wherein the fluid inlet (40, 48) can be connected to a fluid-discharging line of the internal combustion engine, and the fluid outlet (52) can be connected to a fluid-receiving line of the internal combustion engine,
wherein the flow duct (38) has an at least partially circumferential groove which can be sealed off by means of a circumferential seal (16) over the flange (12) on the engine component,
**characterized in that** a first fluid connection (46) is arranged in a connecting region on the engine component (6), said first fluid connection being in alignment with the fluid inlet (40) on the flange (12) when the plug-in pump (2) is mounted on the engine component (6),
or
**characterized in that** a second fluid connection (50) is arranged in a connecting region on the engine component (6), said second fluid connection being in alignment with the fluid outlet (42) on the flange (12) when the plug-in pump (2) is mounted on the engine component (6).

2. Engine arrangement (4) according to Claim 1, wherein the fluid inlet (40, 48) has a hole which is arranged in a region which is averted from the flange (12) and which can be connected to a connection means.

3. Engine arrangement (4) according to Claim 1 or 2, wherein the fluid outlet (52) is a hole which is arranged in a region which is averted from the flange (12) and which can be connected to a connection means.

4. Engine arrangement (4) according to one of Claims 1 to 3, wherein the fluid inlet (46, 48) is connected to a fluid-discharging line, and the fluid outlet (42, 52) is connected to a fluid-receiving line of the internal combustion engine.

5. Engine arrangement (4) according to Claim 4, wherein the fluid-discharging line and the fluid-receiving line are constituent parts of a cooling circuit of the engine.

6. Engine arrangement (4) according to Claim 4, wherein the fluid-discharging line and the fluid-receiving line are constituent parts of an oil circuit of the engine.

7. Engine arrangement (4) having an internal combustion engine and a common-rail system which has an engine component (6) having an opening (10), and a plug-in pump (2) according to one of Claims 1 to 6, wherein the fluid inlet (46, 48) is connected to a fluid-discharging line, and the fluid outlet (42, 52) is connected to a fluid-receiving line of the internal combustion engine.

8. Engine arrangement (4) according to Claim 7, wherein the fluid-discharging line and the fluid-receiving line are constituent parts of a cooling circuit of the engine.

9. Engine arrangement (4) according to Claim 7, wherein the fluid-discharging line and the fluid-receiving line are constituent parts of an oil circuit of the engine.

10. Use of a cooling or oil circuit of an internal combustion engine having a common-rail system for cooling a plug-in pump of the common-rail system by means of a flow duct (38) which is integrated in the plug-in pump (2).

## Revendications

1. Agencement de moteur (4) comprenant un moteur à combustion interne et un système à rampe commune, qui présente un composant de moteur (6) avec une ouverture (10) et une pompe enfichable (2), la pompe enfichable (2) présentant :
- un carter de pompe (7) avec un cylindre réalisé à l'intérieur de celui-ci,
- un piston (24) guidé à l'intérieur de celui-ci,
- une entrée de carburant (33) et
- une sortie de carburant (36),
le carter de pompe (7) possédant en outre une portion d'enfichage (8) pour l'introduction du carter de pompe (7) dans l'ouverture (10) du composant de moteur (6) et une bride (12) limitant la portion d'enfichage (8) pour la fixation du carter de pompe (7) sur le composant de moteur (6),
le carter de pompe (7) présentant au moins un canal d'écoulement (38) avec une entrée de fluide séparée (40, 48) et une sortie de fluide séparée (52),
l'entrée de fluide (40, 48) pouvant être connectée à une conduite distribuant un fluide du moteur à combustion interne et la sortie de fluide (52) pouvant être connectée à une conduite recevant un fluide du moteur à combustion interne,
le canal d'écoulement (38) présentant une rainure au moins en partie périphérique qui peut être étanchéifiée par le biais d'un joint d'étanchéité périphérique (16) par le biais de la bride (12) au niveau du composant de moteur,
**caractérisé en ce qu'**un premier raccord de fluide (46) est disposé dans une région de connexion au niveau du composant de moteur (6), lequel raccord de fluide, lorsque la pompe enfichable (2) est montée au niveau du composant de moteur (6), étant en affleurement avec l'entrée de fluide (40) au niveau de la bride (12) ou
**caractérisé en ce qu'**un deuxième raccord de fluide (50) est disposé dans une région de connexion au niveau du composant de moteur (6), lequel raccord de fluide, lorsque la pompe enfichable (2) est montée au niveau du composant de moteur (6), est en affleurement avec la sortie de fluide (42) au niveau de la bride (12).

2. Agencement de moteur (4) selon la revendication 1, dans lequel l'entrée de fluide (40, 48) est un alésage disposé au niveau d'une région opposée à la bride (12) et pouvant être connecté à un moyen de raccordement.

3. Agencement de moteur (4) selon la revendication 1 ou 2, dans lequel la sortie de fluide (52) est un alésage disposé au niveau d'une région opposée à la bride (12) et pouvant être connecté à un moyen de raccordement.

4. Agencement de moteur (4) selon l'une quelconque des revendications 1 à 3, dans lequel l'entrée de fluide (46, 48) est connectée à une conduite distribuant un fluide et la sortie de fluide (42, 52) est connectée à une conduite recevant un fluide du moteur à combustion interne.

5. Agencement de moteur (4) selon la revendication 4, dans lequel la conduite distribuant du fluide et la conduite recevant du fluide sont des constituants d'un circuit de refroidissement du moteur.

6. Agencement de moteur (4) selon la revendication 4, dans lequel la conduite distribuant du fluide et la conduite recevant du fluide sont des constituants d'un circuit d'huile du moteur.

7. Agencement de moteur (4) comprenant un moteur à combustion interne et un système à rampe commune qui présente une pompe enfichable (2) selon l'une quelconque des revendications 1 à 6,
l'entrée de fluide (46, 48) étant connectée à une conduite distribuant un fluide et la sortie de fluide (42, 52) étant connectée à une conduite recevant un fluide du moteur à combustion interne.

8. Agencement de moteur (4) selon la revendication 7, dans lequel la conduite distribuant un fluide et la conduite recevant un fluide sont des constituants d'un circuit de refroidissement du moteur.

9. Agencement de moteur (4) selon la revendication 7, dans lequel la conduite distribuant un fluide et la conduite recevant un fluide sont des constituants d'un circuit d'huile du moteur.

10. Utilisation d'un circuit de refroidissement ou d'un circuit d'huile d'un moteur à combustion interne comprenant un système à rampe commune pour refroidir une pompe enfichable du système à rampe commune par le biais d'un canal d'écoulement (38) intégré dans la pompe enfichable (2).
